# EUROPEAN PATENT SPECIFICATION

(11) **EP 0 761 470 B1**
(45) Date of publication and mention of the grant of the patent: **04.08.1999**
(21) Application number: 96420275.8
(22) Date of filing: 22.08.1996
(51) Int. Cl.: B41M 5/40, C09D 183/10, C08F 293/00

(54) **Dye-donor element comprising a slipping layer for use in thermal dye transfer**
Gleitschicht enthaltendes farbstoffgebendes Element zum thermischen Farbstoffübertragungsverfahren
Elément donneur de colorant contenant une couche de glissement, pour le transfert thermique de colorant

(30) Priority: 30.08.1995 US 2960; 16.04.1996 US 633238
(43) Date of publication of application: 12.03.1997
(73) Proprietor: EASTMAN KODAK COMPANY, Rochester, New York 14650-2201 (US)
(72) Inventor: Bailey, David Benedict, Rochester, New York 14650-2201 (US); Kaszczuk, Linda, Rochester, New York 14650-2201 (US)
(74) Representative: Fevrier, Murielle Françoise E.

(56) References cited:
- EP-A- 0 380 224
- EP-A- 0 545 710
- EP-A- 0 562 461
- US-A- 5 234 889
- US-A- 5 252 534
- US-A- 5 445 867

## Description

This invention relates to dye-donor elements used in thermal dye transfer, and more particularly to the use of certain silicone copolymers on the back side thereof to prevent various printing defects and tearing of the donor element during the printing operation.

In recent years, thermal transfer systems have been developed to obtain prints from pictures which have been generated electronically from a color video camera. According to one way of obtaining such prints, an electronic picture is first subjected to color separation by color filters. The respective color-separated images are then converted into electrical signals. These signals are then operated on to produce cyan, magenta and yellow electrical signals. These signals are then transmitted to a thermal printer. To obtain the print, a cyan, magenta or yellow dye-donor element is placed face-to-face with a dye-receiving element. The two are then inserted between a thermal printing head and a platen roller. A line-type thermal printing head is used to apply heat from the back of the dye-donor sheet. The thermal printing head has many heating elements and is heated up sequentially in response to the cyan, magenta and yellow signals. The process is then repeated for the other two colors. A color hard copy is thus obtained which corresponds to the original picture viewed on a screen. Further details of this process and an apparatus for carrying it out are contained in U.S. Patent No. 4,621,271.

A problem has existed with the use of dye-donor elements for thermal dye-transfer printing because a thin support is required in order to provide effective heat transfer. For example, when a thin polyester film is employed, it softens when heated during the printing operation and then sticks to the thermal printing head, preventing donor transport. A slipping layer is typically provided to facilitate passage of the dye-donor under the thermal printing head. A defect in the performance of that layer causes intermittent rather than continuous transport across the thermal head. The dye transferred thus does not appear as a uniform area, but rather as a series of alternating light and dark bands (chatter marks).

Another desirable performance characteristic for a slipping layer is a smooth transfer across a wide range of printing conditions. Variable print forces along either the length or width of a print could cause image defects. Differences in print forces are especially magnified in regions of abrupt temperature change. At the transition from Dmax to Dmin, the force may spike upward from Dmax to a peak force and then return to Dmin. This differential is referred to as "pops" since an audible popping noise can be heard in extreme cases.

In addition to printing performance, a slipping layer should be of low cost and be coatable from an amenable coating solvent. Halogenated solvents are among the least desirable for environmental reasons.

U.S. Patent 5,252,534 disclose a heat-resistant layer on the back surface of a thermal dye-donor element comprising a polyimide-siloxane copolymer which is formed by a condensation polymerization. While these materials have been effective, there is a problem in that a condensation polymerization often requires anhydrous conditions and an exact balance of purified reagents which can be difficult to achieve. In addition, such polymers are principally soluble in halogenated solvents which are hazardous to the environment.

It is an object of this invention to provide a dye donor element having a slipping layer comprising a siloxane copolymer which made to high molecular weight without the rigorous purity required for condensation polymerizations and which is soluble in less hazardous solvents such as ketones. It is another object of this invention to provide a dye donor element having a siloxane copolymer slipping layer which can be made from vinyl monomers which are readily available and relatively inexpensive.

These and other objects are achieved in accordance with this invention which relates to a dye-donor element for thermal dye transfer comprising a support having on one side thereof a dye layer comprising a thermally transferable dye and on the other side a slipping layer comprising a polyvinyl-block-siloxane copolymer, the polysiloxane component comprising from 2 to 30 weight % of the copolymer, and the polysiloxane component having a molecular weight of at least 3900.

The above copolymers have the appropriate physical properties to provide good lubrication across the range of the printing temperatures, thereby allowing good transport through a thermal printer, and can function as the only component of a slipping layer without the need to add solid particles, liquid additives, or to crosslink the polymer with its attendant disadvantages.

In a preferred embodiment of the invention, the vinyl-block-siloxane copolymer contains recurring units having the structural formula: 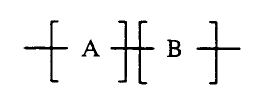 wherein:
A represents a vinyl polymer such as an acrylate, methacrylate, acrylamide, styrene, hydroxystyrene, vinyl pyrollidinone, maleic anhydride, N-substituted maleimides, vinyl ethers, etc; and
B represents a group having the structural formula: 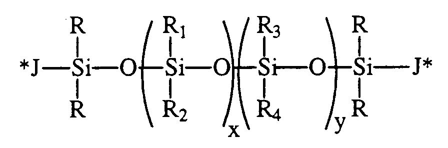 wherein:
   each J represents 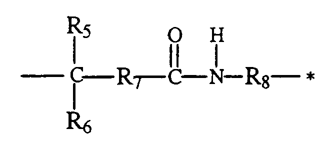
   * represents the point of attachment,
   R, R₁, R₂, R₃, and R₄ each independently represents a substituted or unsubstituted alkyl or fluoroalkyl group having from 1 to 5 carbon atoms, or a substituted or unsubstituted aryl group having from 6 to 12 carbon atoms;
   R₅ and R₆ each independently represents a substituted or unsubstituted alkyl group having from 1 to 5 carbon atoms, a substituted or unsubstituted aryl group having from 6 to 12 carbon atoms, a halogen, or cyano;
   R₇ and R₈ each independently represents a substituted or unsubstituted alkyl group having from 1 to 5 carbon atoms, a substituted or unsubstituted aryl group having from 6 to 12 carbon atoms; and
   the values of x and y are each from 0 to 400, with the proviso that x + y is from 50 to 400.

In a preferred embodiment of the invention, R, R₁, R₂, R₃, R₄ and R₅ are each methyl, R₆ is cyano, R₇ is -CH₂CH₂-, and R₈ is -CH₂CH₂CH₂-.

The overall molecular weight of the above copolymer, in general, is from about 40,000 to about 1,000,000. In a preferred embodiment of the invention the glass transition temperatures of the copolymers are greater than 100°C.

Slipping layers based on vinyl copolymers containing bound polydimethysiloxane (PDMS) segments have been prepared by initiating vinyl polymerization with an oligomeric silicone-initiator. Using this approach, the silicone segment is incorporated as a block or main chain segment rather than as a pendant graft. In another preferred embodiment of the invention, the polyvinyl-block-silicone copolymer is derived from a vinyl monomer and a macroazo polydimethylsiloxane initiator.

The poly(dimethylsiloxanes) which are part of the copolymers employed in the invention are available commercially such as SWS F881-A, mol. wt. 1700; SWS F881-B, mol. wt. 3900; and SWS F881-C, mol. wt. 7400; (Waker Silicones Co.); PS-510, mol. wt. 2500; and PS-513, mol. wt. 27,000; (Huls America Co.); and X2-2616, mol. wt. 14,000 (Dow Corning).

The siloxane copolymer defined above can be employed in the invention herein at any concentration useful for the intended purpose. In general, good results have been obtained at a concentration of about 0.05 to about 1.0 g/m², preferably about 0.3 to about 0.6 g/m².

Any dye can be used in the dye layer of the dye-donor element of the invention provided it is transferable to the dye-receiving layer by the action of heat. Especially good results have been obtained with sublimable dyes such as 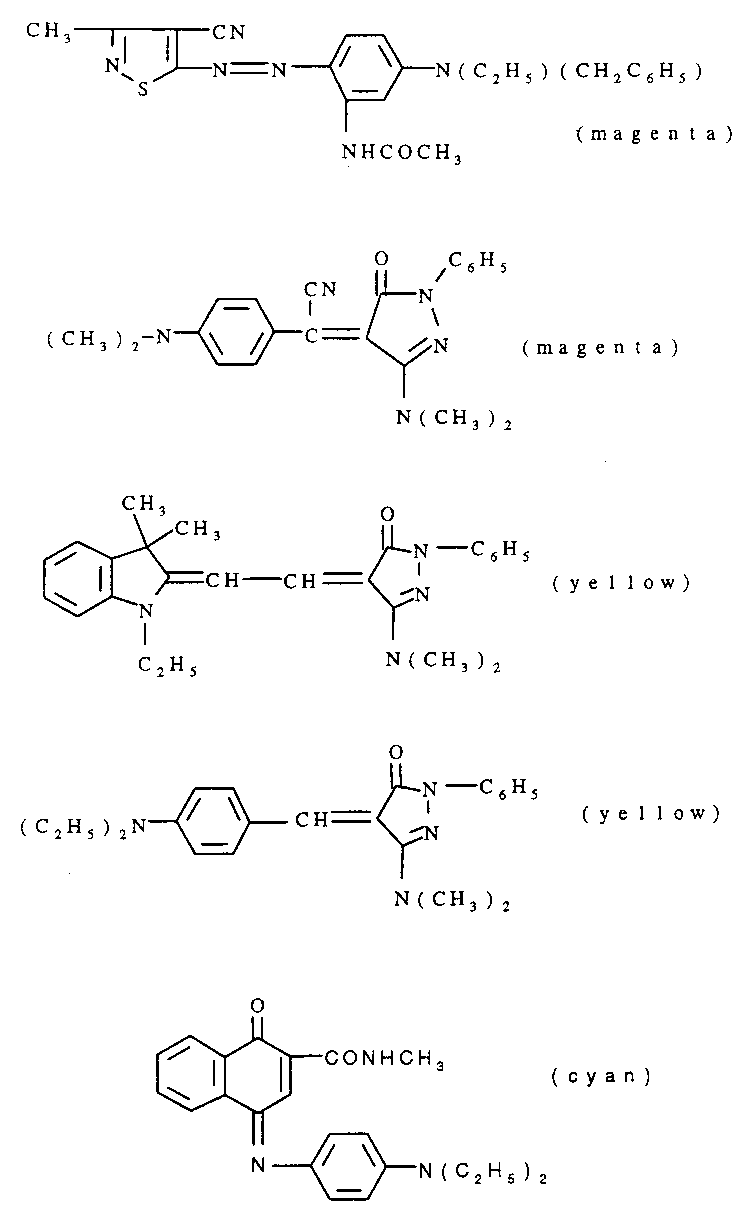 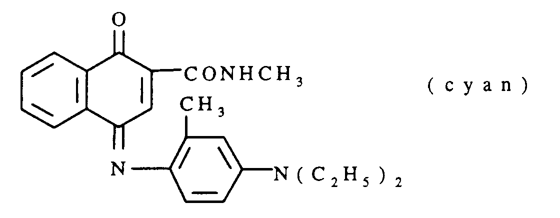 or any of the dyes disclosed in U.S. Patent 4,541,830. The above dyes may be employed singly or in combination to obtain a monochrome. The dyes may be used at a coverage of from about 0.05 to about 1 g/m² and are preferably hydrophobic.

A dye-barrier layer may be employed in the dye-donor elements of the invention to improve the density of the transferred dye. Such dye-barrier layer materials include hydrophilic materials such as those described and claimed in U.S. Patent No. 4,716,144.

The dye layer of the dye-donor element may be coated on the support or printed thereon by a printing technique such as a gravure process.

Any material can be used as the support for the dye-donor element of the invention provided it is dimensionally stable and can withstand the heat of the thermal printing heads. Such materials include polyesters such as poly(ethylene terephthalate); polyamides; polycarbonates; glassine paper; condenser paper; cellulose esters; fluorine polymers; polyethers; polyacetals; polyolefins; and polyimides. The support generally has a thickness of from about 2 to about 30 mm. It may also be coated with a subbing layer, if desired, such as those materials described in U.S. Patent No. 4,695,288 or U.S. Patent No. 4,737,486.

The dye-receiving element that is used with the dye-donor element of the invention usually comprises a support having thereon a dye image receiving layer. The support may be a transparent film such as a poly(ether sulfone), a polyimide, a cellulose ester such as cellulose acetate, a poly(vinyl alcohol-co-acetal) or a poly(ethylene terephthalate). The support for the dye-receiving element may also be reflective such as baryta-coated paper, polyethylene-coated paper, white polyester (polyester with white pigment incorporated therein), an ivory paper, a condenser paper or a synthetic paper such as DuPont Tyvek®.

The dye image-receiving layer may comprise, for example, a polycarbonate, a polyurethane, a polyester, poly(vinyl chloride), poly(styrene-co-acrylonitrile), polycaprolactone or mixtures thereof. The dye image-receiving layer may be present in any amount which is effective for the intended purpose. In general, good results have been obtained at a concentration of from about 1 to about 5 g/m².

As noted above, the dye donor elements of the invention are used to form a dye transfer image according to claim 7. Such a process comprises imagewise heating a dye-donor element as described above and transferring a dye image to a dye receiving element to form the dye transfer image.

The dye donor element of the invention may be used in sheet form or in a continuous roll or ribbon. If a continuous roll or ribbon is employed, it may have only one dye or may have alternating areas of other different dyes, such as sublimable cyan and/or magenta and/or yellow and/or black or other dyes. Such dyes are disclosed in U.S. Patent Nos. 4,541,830; 4,698,651; 4,695,287; 4,701,439; 4,757,046; 4,743,582; 4,769,360 and 4,753,922. Thus, one-, two-, three- or four-color elements (or higher numbers also) are included within the scope of the invention.

In a preferred embodiment of the invention, the dye-donor element comprises a poly(ethylene terephthalate) support coated with sequential repeating areas of yellow, cyan and magenta dye, and the above process steps are sequentially performed for each color to obtain a three-color dye transfer image. Of course, when the process is only performed for a single color, then a monochrome dye transfer image is obtained.

Thermal printing heads which can be used to transfer dye from the dye-donor elements of the invention are available commercially.

A thermal dye transfer assemblage of the invention comprises
(a) a dye-donor element as described above, and
(b) a dye-receiving element as described above,
the dye receiving element being in a superposed relationship with the dye donor element so that the dye layer of the donor element is in contact with the dye image-receiving layer of the receiving element.

The above assemblage comprising these two elements may be preassembled as an integral unit when a monochrome image is to be obtained. This may be done by temporarily adhering the two elements together at their margins. After transfer, the dye-receiving element is then peeled apart to reveal the dye transfer image.

When a three-color image is to be obtained, the above assemblage is formed on three occasions during the time when heat is applied by the thermal printing head. After the first dye is transferred, the elements are peeled apart. A second dye-donor element (or another area of the donor element with a different dye area) is then brought in register with the dye-receiving element and the process is repeated. The third color is obtained in the same manner.

The following examples are provided to illustrate the invention.

### Polymer 1- Preparation of Macroazo Silicone Initiator

The macroazo initiator was prepared by converting 4,4'-azobis(4-cyanovaleric acid) to the activated bis p-nitrobenzoate ester. The ester was then reacted with an amino-terminated PDMS in a two-phase toluene-DMAc reaction. The macroazo initiator was precipitated into methanol and extracted repeatedly with methanol to remove residual p-nitrophenol. The molecular weight of the resultant polymer was about four to seven times greater than that of the starting PDMS which indicates about seven PDMS-azo couplings. The end groups of the macro azo chain were a combination of PDMS groups and azo groups. The majority of the azo groups were within the chain and were flanked by two PDMS segments. Each azo moiety represented a potential growth site for a vinyl segment. PDMS chains of 5,000 and 14,000 molecular weight have been used. A typical reaction scheme is shown below:

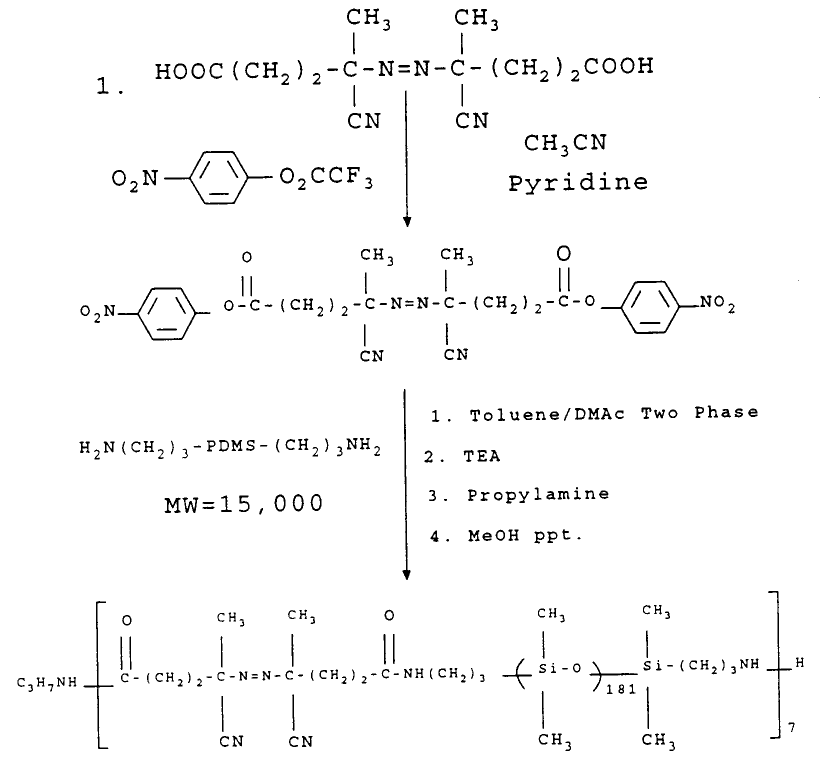

### P-Nitrophenyl ester of 4-4' azobis(4-cyanovaleric acid)

A 500 mL 3NRB flask fitted with a thermometer, condenser and an argon purge was charged with 33.3g trifluoroacetic anhydride, 15.5 g p-nitrophenol and 22.2 ml of toluene. The p-nitrophenol dissolved as the mixture was stirred and heated to reflux. The condenser was then replaced with a distillation apparatus and the trifluoroacetic acid, excess trifluoroacetic anhydride, and toluene were distilled off. Heating was discontinued when the pot temperature had reached 160°C. The crude p-nitrophenyl trifluoroacetate (25.6g, 98%) was a dense pale yellow liquid.

The p-nitrophenyl trifluoroacetate was cooled to room temperature and the flask was charged with 270 ml acetonitrile, 13.7 gram 4-4' azobis(4-cyanovaleric acid), and 72 ml pyridine. The mixture was heated to 50°C for several minutes to dissolve the 4-4' azobis(4-cyanovaleric acid) and was then quickly cooled to room temperature. The product crystallized as the solution was stirred overnight at room temperature under argon. The crystals were isolated by filtration, washed with 100 ml of acetonitrile and air-dried on the filter. Yield = 93%. Structure was confirmed by ¹HNMR run in dimethyl sulfoxide (DMSO)D₆. The product was stored cold.

### PDMS-azo initiator

A 250 ml 3NRB flask fitted with a mechanical stirrer and an argon purge was charged with 20.9 g bisaminopropyl PDMS, 18 ml toluene, 0.44 g triethylamine (TEA) 15 ml N,N'dimethylacetamide (DMAC) and 0.81 g of the p-nitrophenyl ester of 4,4' azobis(4-cyanovaleric acid). The yellow, viscous reaction mixture has three phases: a toluene-rich PDMS layer, a DMAC solution of the bis(p-nitrophenyl) ester, and some insoluble bis(p-nitrophenyl) ester. The insoluble fraction gradually dissolved with stirring over 20 hours at room temperature.

Propylamine (0.22 g) was then added and allowed to react for 1 hour to convert all remaining p-nitrophenyl ester groups to N-propyl amides. Addition of 50 ml of methanol to the reaction mixture precipitated a very soft polymer. The yellow methanol layer was decanted and the gummy precipitate kneaded with a series of four 50 ml methanol washes to extract p-nitrophenol. Each subsequent wash was less yellow but never entirely colorless. The resulting soft polymer was dissolved in toluene to 20% solids and stored cold. Mw by GPC of the PDMS-azo was 78,300 as compared to 16,800 for the starting PDMS, indicating about 4-5 PDMS-azo couplings. Gas chromatography showed the presence of a small amount of p-nitrophenol.

### Polymerization of Vinyl Monomers Using Macroazo Silicone Initiator

The general polymerization procedure was to dissolve the appropriate monomers and the macroazo initiator in a solvent (methyl ethyl ketone or toluene for example), purge with argon and heat to 70°C for 16 hours. The half-life for the azo group was estimated to be about 4 hours at 70°C and about 12 hours at 60°C.

In the case of slowly polymerizing monomers, the azo groups were consumed before the monomer polymerized completely. For example, styrene reached only 20% conversion by the time the azo groups were consumed. Methyl methacrylate reached 40 to 50%. Consequently, the isolated polymer was richer in PDMS than the original charge. In the case of monomers which polymerized rapidly (maleimide copolymers with styrene or vinylpyrollidinone, >95% in ~10 hours), the monomer was consumed before all the azo groups had been used up. In this case there may have been residual azo groups left in the final polymer.

A useful feature of an oligomeric initiator is that on average only one of the several azo groups in the macro initiator has to be incorporated into the vinyl structure to bind all of the PDMS. A PDMS sequence may be flanked by two unreacted azo groups, but is nevertheless connected to a growing vinyl chain if any of the other azos in the macro initiator oligomer have initiated a chain. Therefore, on a statistical basis, all of the PDMS sequences can be incorporated into the vinyl structure even at low conversions. A PDMS macromonomer approach, on the other hand, is less efficient for incorporating PDMS. With macromonomers, high and, in some cases, impractical monomer conversions are needed for complete incorporation.

The final polymer structure achieved with a macroazo initiator may consist of long multiple sequences of PDMS in the main chain and some vinyl homopolymer. Not all azo groups lead to a growth site. From 30 to 40% may recombine (cage recombination) to give PDMS coupled directly to PDMS. Therefore, PDMS sequences longer than the original PDMS may result. In addition, the growing vinyl chains may terminate by disproportionation or by recombination. The final structure is a multisegmented block PDMS-vinyl copolymer.

### 8% PDMS-1-Vinyl-2-Pyrrolidinone/N-Cyclohexyl-maleimide

A 2l 3NRB flask fitted with a condenser, argon purge and mechanical stirrer is charged with 158 g of a 20% (w/w) PDMS-azo initiator solution in toluene, 586 g of toluene, 139 g of 1-vinyl-2-pyrrolidinone, and 224 g of N-cyclohexylmaleimide. The reaction flask is purged with argon and then heated at 70°C for 24 hours. The polymer is precipitated from isopropanol, filtered and air dried to yield 85-90%. Mn and Mw by GPC are 87,000 and 170,000, respectively, % PDMS by Neutron Activation Analysis is 5.5%; the Tg of the copolymer is 239°C and TGA = 307°C.

A wide variety of monomers have been polymerized and copolymerized with the macro azo initiator. The following list shows the copolymers and their % PDMS contents as employed in the test and comparative samples.

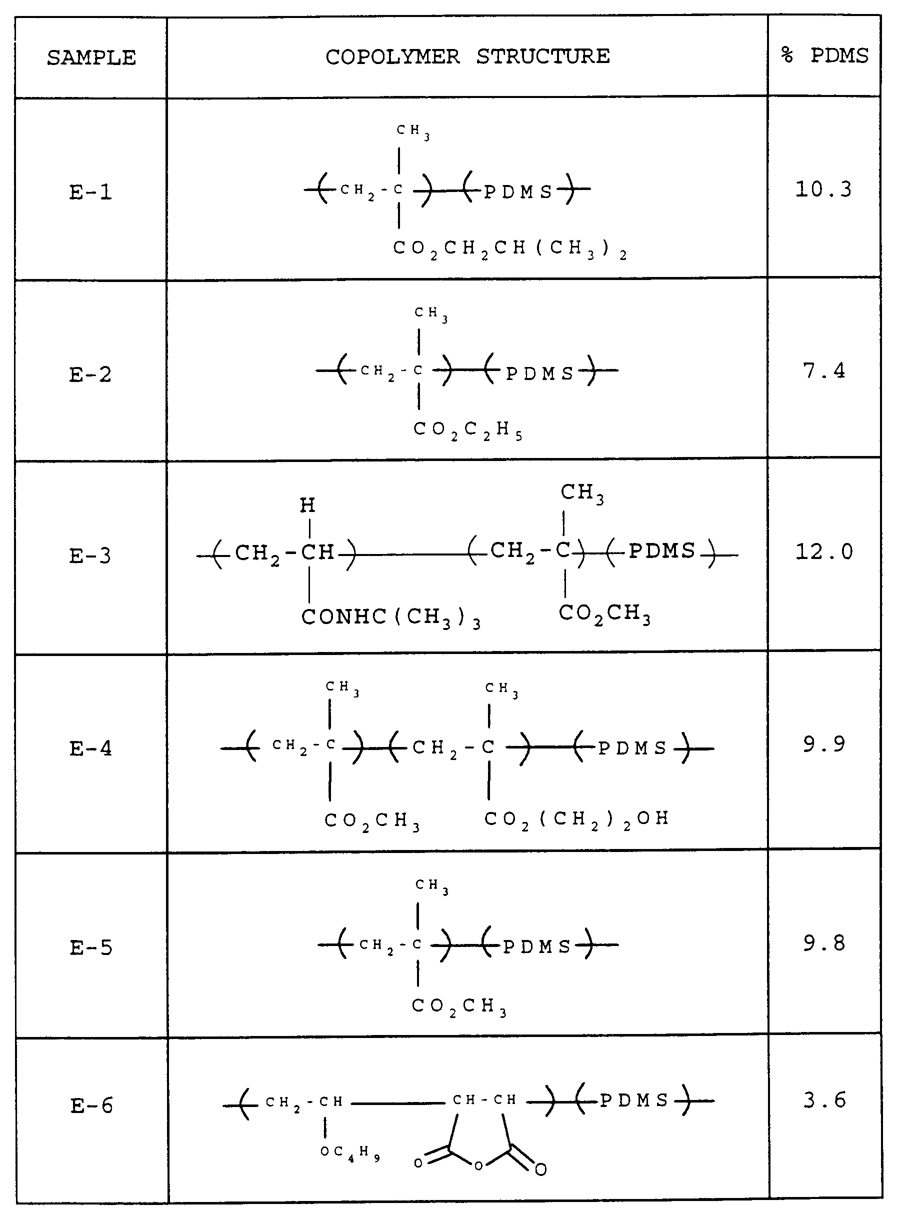

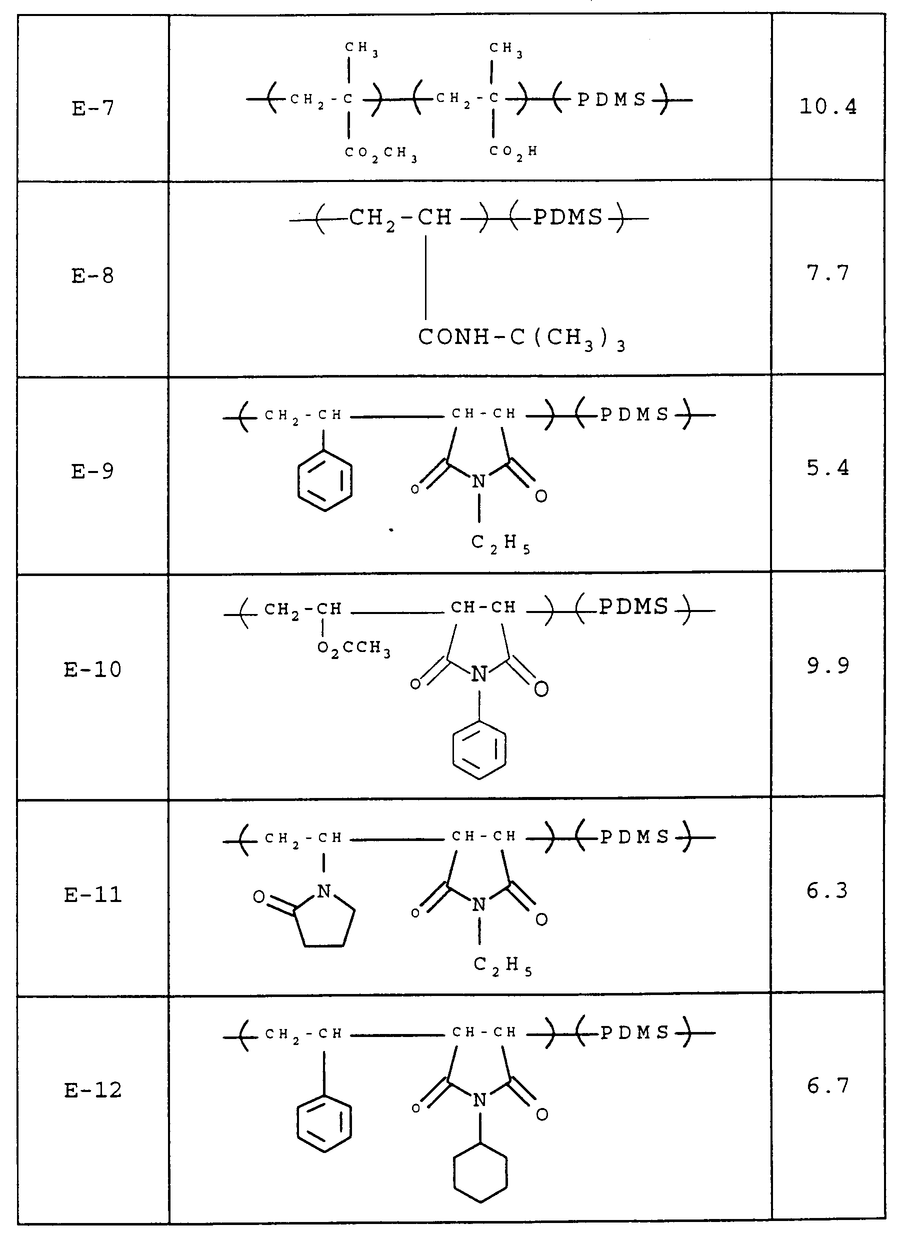

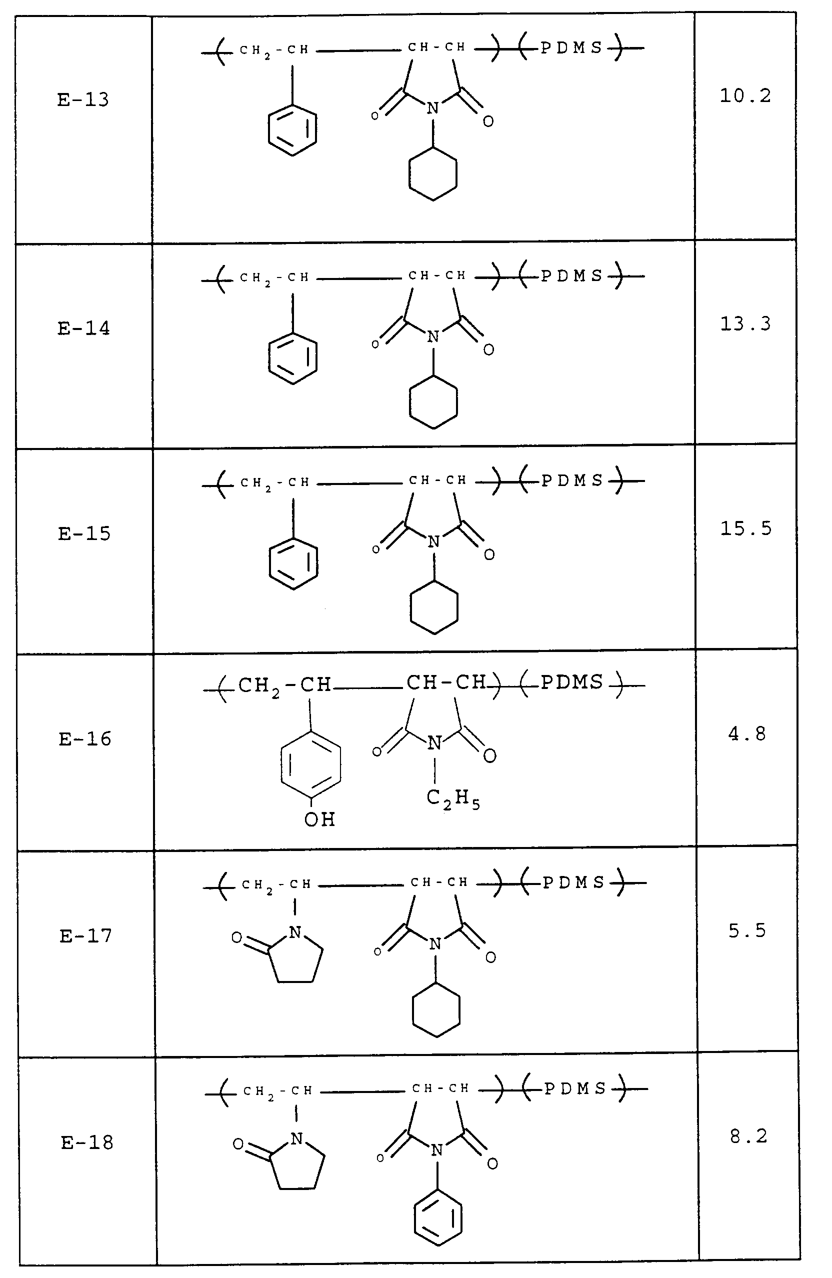

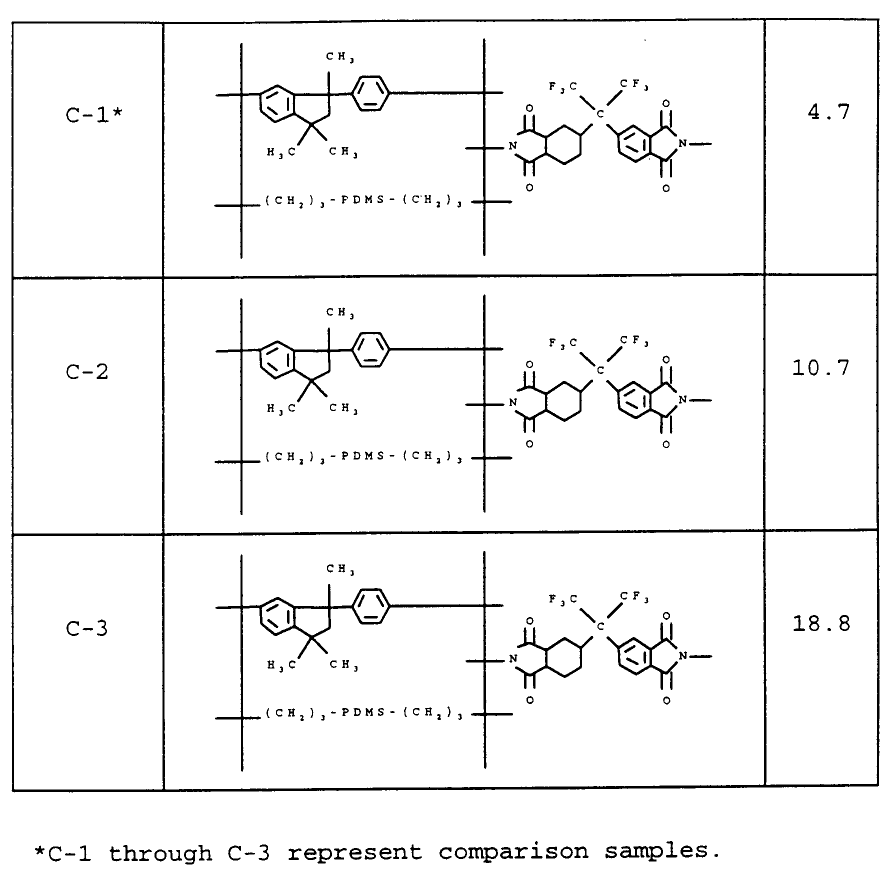

The physical properties of the above copolymers are given in the following table:

**TABLE 1**

| SAMPLE DESIGNATION | % PDMS | Mw | Tg (°C) | TGA (°C) |
|---|---|---|---|---|
| E-1 | 10.3% | 496,000 | 69 | 208 |
| E-2 | 7.4% | 570,000 | 74 | 241 |
| E-3 | 12.0% | 593,000 | 118 | 364 |
| E-4 | 9.9% | 300,000 | 125 | 277 |
| E-5 | 9.8% | 656,000 | 126 | 344 |
| E-6 | 3.6% | 227,000 | 126 | 252 |
| E-7 | 10.4% | 432,000 | 135 | 363 |
| E-8 | 7.7% | 41,000 | 136 | 336 |
| E-9 | 5.4% | 394,000 | 178 | 375 |
| E-10 | 9.9% | 389,000 | --- | 272 |
| E-11 | 6.3% | 238,500 | 206 | 305 |
| E-12 | 6.7% | 548,000 | 207 | 389 |
| E-13 | 10.2% | 380,000 | 207 | 389 |
| E-14 | 13.3% | 379,000 | 207 | 389 |
| E-15 | 15.5% | 364,000 | 207 | 389 |
| E-16 | 4.8% | 475,000 | 224 | 399 |
| E-17 | 5.5% | 170,000 | 239 | 305 |
| E-18 | 8.2% | 133,000 | --- | 284 |
| C-1 | 4.7% | --- | --- | --- |
| C-2 | 10.7% | --- | --- | --- |
| C-3 | 18.8% | --- | --- | --- |

### Preparation of Donor Test Samples

Dye-donor elements were prepared by applying a subbing layer of Tyzor TBT® (titanium tetrabutoxide from DuPont) (0.13 g/m²) to a Mylar® film (poly(ethylene terephthalate) from DuPont) (6.25 µm). The so prepared substrate was then patch-coated with the yellow, magenta, and cyan formulations described below producing a thermal dye transfer donor material as known in the art.

The donor dye formulations and their material laydowns (in g/m²) were as follows:

### yellow dye formulation

- 0.26: first yellow dye illustrated above
- 0.14: CAP 482-20 (a cellulose acetate propionate of 20 s viscosity, Eastman Chemical Co.)
- 0.07: CAP 482-0.5 (a cellulose acetate propionate of 5 s viscosity, Eastman Chemical Co.)
- 0.01: S363 N-1 (a micronized blend of polyethylene, polypropylene, and oxidized polyethylene particles, Shamrock Technologies, Inc.)
- 0.002: Fluorad® FC-430 (a fluorosurfactant, 3M Corp.)

coated from a 60:40 toluene/isopropanol solvent mixture;

### magenta dye formulation

- 0.14: first magenta dye illustrated above
- 0.15: second magenta dye illustrated above
- 0.24: CAP 482-20
- 0.08: CAP 482-0.5
- 0.11: S363-N1
- 0.002: Fluorad® FC-430

coated from a 65:30:5 toluene/methanol/cyclopentanone solvent mixture;

### cyan dye formulation

- 0.37: first cyan dye illustrated above
- 0.11: second cyan dye illustrated above
- 0.28: CAP 482-20
- 0.07: CAP 482-0.5
- 0.02: S363-N1
- 0.002: Fluorad® FC-430

coated from a 60:40 toluene/isopropanol solvent mixture.

Test slipping layers according to the invention were coated onto the backside (opposite to the dye layers) of the above described dye-donor; they were coated at 0.32 g/m² from methyl ethyl ketone onto a subbing layer of 0.13 g/m² Tyzor® TBT on the backside of the Mylar® substrate. The films were dried at 28°C for three minutes.

### Preparation of Dye-Receiver Element

The dye-receiver element used in the experimental work was prepared by extrusion-laminating a paper core with a 38 µm thick microvoided composite film (OPPalyte® 350 TW, Mobil Chemical Co.) as disclosed in U.S. Patent 5,244,861. The composite film side of the resulting laminate was then coated with a dye-receiving layer as described in U.S. Patent 5,262,378, Example 3, col. 6 lines 14 through 36.

### Printing and Force Measurements

The test donor samples with copolymer slipping layers applied as described were subjected to conventional testing for the force needed to transport the donor/receiver combination past a thermal print head as follows:

The dye side of the above donor set element strip was placed in contact with the dye-receiving layer of the same area. This assembly was clamped to a stepper motor driving a 60 mm diameter rubber roller. Next, a TDK Model L-231 thermal head, thermostatted at 28°C was pressed against the slipping layer side of the assembly with a force of 24.75 newton pushing it against the rubber roller.

The imaging electronics were activated causing the donor/receiver assemblage to be drawn between the print head and roller. At the same time the resistive elements in the thermal print head were pulsed for 128 µs/pulse at 134 microsecond intervals during the 4.575 ms/dot printing time. A stepped density image was generated incrementally increasing the number of pulses/dot from 0 to 32 (Dmin to Dmax). The voltage supplied to the print head was approximately 13 volts, resulting in a maximum total energy of approximately 1.45 mJ/dot.

As each area test pattern of given density was being generated, the torque required to draw the assemblage through the print nip was measured with a Himmelstein Corp. Model 3-308TL (16-1) Torquementer (1.09 meter-Newton range) and Model 6.201 Conditioning Module. Print forces below 10 newton are generally acceptable. Data were taken at 0 pulses/dot (Dmin), 8 pulses/dot (Dmid), and at 32 pulses/dot (Dmax). The results are shown in the following table:

**TABLE 2**

| | | Print Forces (newton) at | | |
|---|---|---|---|---|
| SAMPLE | Pops | Dmax | Dmid | Dmin |
| E-1 | 5.85 | 6.71 | 4.77 | 1.62 |
| E-2 | 5.85 | 7.47 | 5.13 | 2.43 |
| E-3 | 5.04 | 5.54 | 3.96 | 1.62 |
| E-4 | 4.68 | 5.94 | 2.79 | 1.62 |
| E-5 | 4.68 | 7.47 | 3.96 | 3.20 |
| E-6 | 3.91 | 5.13 | 2.43 | 1.26 |
| E-7 | 3.11 | 5.54 | 4.37 | 3.20 |
| E-8 | 4.68 | 5.54 | 4.77 | 2.03 |
| E-9 | 3.91 | 5.94 | 3.20 | 2.79 |
| E-10 | 3.51 | 4.77 | 2.43 | 1.62 |
| E-11 | 3.11 | 4.77 | 3.20 | 2.03 |
| E-12 | 2.75 | 4.77 | 2.43 | 2.03 |
| E-13 | 2.75 | 6.71 | 5.13 | 4.23 |
| E-14 | 2.34 | 5.94 | 4.37 | 4.37 |
| E-15 | 2.75 | 4.37 | 2.43 | 2.03 |
| E-16 | 2.34 | 4.77 | 2.43 | 2.43 |
| E-17 | 1.58 | 3.60 | 2.03 | 2.43 |
| E-18 | 0.41 | 2.43 | 2.43 | 3.20 |
| C-1 | 2.34 | 3.60 | 1.62 | 2.03 |
| C-2 | 2.34 | 4.37 | 2.43 | 2.03 |
| C-3 | 2.75 | 4.37 | 2.43 | 1.26 |

The above results show that the comparison of vinyl copolymers with polyimide copolymers shows print forces well below 10 newton. Pops for these polymers is also low and compares favorably with the comparison copolymers C-1 - C-3.

A similar force test was run using a TDK Model LV5406A thermal head thermostatted at 35°C. This assemblage used a 1.80 cm diameter platen drive roller rather than a sample clamped to a stepper motor-driven 60 mm diameter rubber roller. A force of 65.25 newton was used to press the thermal head against the slipping layer side of the assemblage pushing it against the platen roller.

The resistive elements in the thermal print head were pulsed for 63.75 µs/pulse at 74.39 µs microsec intervals during the 5.005 ms/dot printing time. The number of pulses/dot ranged from 0 to 64 (Dmin to Dmax). The voltage supplied to the print head was approximately 14 volts, resulting in a maximum total energy of approximately 0.235 mJ/dot. The following results were obtained:

**TABLE 3**

| | | Print Forces (newton) at | | |
|---|---|---|---|---|
| SAMPLE | Pops | Dmax | Dmid | Dmin |
| E-1 | 4.64 | 8.46 | 3.65 | 3.78 |
| E-2 | 6.08 | 9.98 | 4.73 | 3.87 |
| E-3 | 4.19 | 7.88 | 3.74 | 3.33 |
| E-4 | 3.51 | 8.28 | 3.60 | 4.73 |
| E-5 | 3.20 | 8.55 | 3.78 | 5.36 |
| E-6 | 3.83 | 7.25 | 4.05 | 3.83 |
| E-7 | 3.42 | 7.92 | 4.23 | 5.27 |
| E-8 | 3.87 | 8.60 | 4.50 | 4.50 |
| E-9 | 1.85 | 8.78 | 5.36 | 6.35 |
| E-10 | 2.25 | 6.62 | 3.69 | 4.46 |
| E-11 | 0.77 | 7.01 | 3.33 | 4.82 |
| E-12 | 2.21 | 8.33 | 5.49 | 6.48 |
| E-13 | 1.17 | 6.35 | 3.60 | 5.63 |
| E-14 | 1.53 | 8.37 | 5.90 | 6.89 |
| E-15 | 0.63 | 8.15 | 5.10 | 6.93 |
| E-16 | 1.53 | 8.24 | 5.58 | 6.66 |
| E-17 | 0.36 | 8.55 | 5.63 | 7.74 |
| E-18 | 0.05 | 8.73 | 6.12 | 8.15 |
| C-1 | 0.99 | 7.79 | 5.49 | 6.57 |
| C-2 | 0.54 | 7.29 | 4.50 | 5.99 |
| C-3 | 3.11 | 7.11 | 4.37 | 4.64 |

The above results show that the comparison of vinyl copolymers with polyimide copolymers shows print forces below 10 newton. Pops for these polymers is also low and compares favorably with the comparison copolymers C-1 - C-3.

## Claims

1. A dye-donor element for thermal dye transfer comprising a support having on one side thereof a dye layer comprising a thermally transferable dye and on the other side a slipping layer comprising a polyvinyl-block-siloxane copolymer, the polysiloxane component comprising from 2 to 30 weight % of said copolymer, and the polysiloxane component having a molecular weight of at least 3900.

2. The element of Claim 1 wherein said polyvinyl-block-silicone copolymer is derived from a vinyl monomer and a macroazo polydimethylsiloxane initiator.

3. The element of Claim 1 wherein said polyvinyl blocks have a Tg of greater than 100°C.

4. The element of Claim 1 wherein said polyvinyl-block-siloxane copolymer contains recurring units having the structural formula: 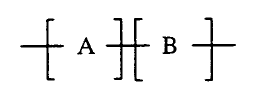 wherein:
A represents a vinyl polymer; and
B represents a group having the structural formula: 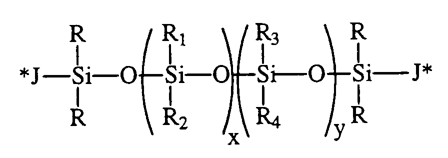 wherein:
each J represents 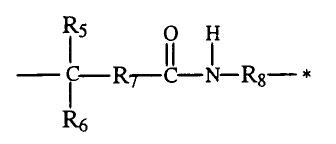
* represents the point of attachment,
R, R₁, R₂, R₃, and R₄ each independently represents a substituted or unsubstituted alkyl or fluoroalkyl group having from 1 to 5 carbon atoms, or a substituted or unsubstituted aryl group having from 6 to 12 carbon atoms;
R₅ and R₆ each independently represents a substituted or unsubstituted alkyl group having from 1 to 5 carbon atoms, a substituted or unsubstituted aryl group having from 6 to 12 carbon atoms, a halogen, or cyano;
R₇ and R₈ each independently represents a substituted or unsubstituted alkyl group having from 1 to 5 carbon atoms, a substituted or unsubstituted aryl group having from 6 to 12 carbon atoms; and
the values of x and y are each from 0 to 400, with the proviso that x + y is from 50 to 400.

5. The element of Claim 4 wherein A represents an acrylate, methacrylate, acrylamide, styrene, hydroxystyrene, vinyl pyrollidinone, maleic anhydride, N-substituted maleimides or vinyl ether polymer.

6. The element of Claim 4 wherein R, R₁, R₂, R₃, R₄ and R₅ are each methyl, R₆ is cyano, R₇ is -CH₂CH₂-, and R₈ is -CH₂CH₂CH₂-.

7. A process of forming a dye transfer image comprising:
(a) imagewise-heating a dye-donor element according to claim 1, and
(b) thermally transferring a dye image to a dye-receiving element in a superposed relationship with the dye donor element so that the dye layer of the donor element is in contact with a dye receiving layer of the dye-receiving element.

8. The process of Claim 7 wherein said dye-donor element is as defined in claim 4.

9. A thermal dye transfer assemblage comprising
(a) a dye-donor element as defined in claim 1, and
(b) a dye receiving element comprising a support having thereon a dye image-receiving layer, said dye-receiving element being in a superposed relationship with said dye-donor element so that said dye layer is in contact with said dye image-receiving layer.

10. The assemblage of Claim 9 wherein said dye-donor element is as defined in claim 4.

## Patentansprüche

1. Farbstoff-Donorelement für eine thermische Farbstoffübertragung, umfassend einen Träger, der auf einer Seite desselben eine Farbstoffschicht, die einen thermisch übertragbaren Farbstoff umfaßt, und auf der anderen Seite eine Gleitschicht aufweist, die ein Polyvinyl-Block-Siloxan-Copolymer umfaßt, wobei die Polysiloxan-Komponente 2 bis 30 Gewichts-% des Copolymers umfaßt und die Polysiloxan-Komponente ein Molekulargewicht von mindestens 3900 aufweist.

2. Element nach Anspruch 1, in welchem das Polyvinyl-Block-Silicon-Copolymer von einem Vinyl-Monomer und einem Makroazopolydimethylsiloxan-Initiator abgeleitet ist.

3. Element nach Anspruch 1, in welchem die Polyvinyl-Blöcke eine Tg von mehr als 100°C aufweisen.

4. Element nach Anspruch 1, in welchem das Polyvinyl-Block-Siloxan-Copolymer Wiederholungseinheiten mit der Strukturformel: 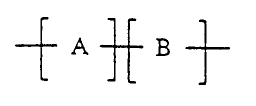 enthält,
in der:
A ein Vinyl-Polymer darstellt; und
B eine Gruppe mit der Strukturformel: 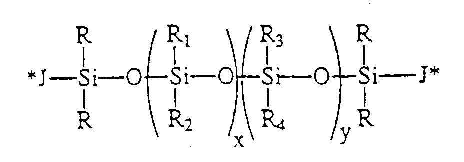 darstellt,
in der:
jedes J 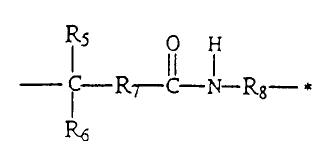
* stellt den Verknüpfungspunkt dar
darstellt,
R, R₁, R₂, R₃ und R₄ jeweils unabhängig eine substituierte oder unsubstituierte Alkyl- oder Fluoralkylgruppe mit 1 bis 5 Kohlenstoffatomen oder eine substituierte oder unsubstituierte Arylgruppe mit 6 bis 12 Kohlenstoffatomen darstellen;
R₅ und R₆ jeweils unabhängig eine substituierte oder unsubstituierte Alkylgruppe mit 1 bis 5 Kohlenstoffatomen, eine substituierte oder unsubstituierte Arylgruppe mit 6 bis 12 Kohlenstoffatomen, ein Halogen oder Cyano darstellen;
R₇ und R₈ jeweils unabhängig eine substituierte oder unsubstituierte Alkylgruppe mit 1 bis 5 Kohlenstoffatomen, eine substituierte oder unsubstituierte Arylgruppe mit 6 bis 12 Kohlenstoffatomen darstellen; und
die Werte von x und y jeweils 0 bis 400 sind, mit der Maßgabe, daß x + y 50 bis 400 ist.

5. Element nach Anspruch 4, in welchem A ein Acrylat-, Methacrylat-, Acrylamid-, Styrol-, Hydroxystyrol-, Vinylpyrrolidinon-, Maleinsäureanhydrid-, N-substituiertes Maleimid- oder Vinylether-Polymer darstellt.

6. Element nach Anspruch 4, in welchem R, R₁, R₂, R₃, R₄ und R₅ jeweils Methyl sind, R₆ Cyano ist, R₇ für -CH₂CH₂- steht und R₈ für -CH₂CH₂CH₂-steht.

7. Verfahren zur Erzeugung eines Farbstoffübertragungsbildes, umfassend:
(a) bildweises Erwärmen eines Farbstoff-Donorelementes nach Anspruch 1 und
(b) thermisches Übertragen eines Farbstoffbildes auf ein Farbstoff-Empfangselement in einer überlagerten Beziehung mit dem Farbstoff-Donorelement, so daß die Farbstoffschicht des Donorelementes in Kontakt mit einer Farbstoff-Empfangsschicht des Farbstoff-Empfangselementes steht, um das Farbstoffübertragungsbild zu erzeugen.

8. Verfahren nach Anspruch 7, in welchem das Farbstoff-Donorelement wie in Anspruch 4 definiert ist.

9. Zusammenstellung zur thermischen Farbstoffübertragung, umfassend:
(a) ein Farbstoff-Donorelement, wie in Anspruch 1 definiert, und
(b) ein Farbstoff-Empfangselement, das einen Träger umfaßt, welcher darauf eine Farbstoffbild-Empfangsschicht aufweist, wobei das Farbstoff-Empfangselement in überlagerter Beziehung mit dem Farbstoff-Donorelement steht, so daß die Farbstoffschicht in Kontakt mit der Farbstoffbild-Empfangsschicht vorliegt.

10. Zusammenstellung nach Anspruch 9, in welcher das Farbstoff-Donorelement wie in Anspruch 4 definiert ist.

## Revendications

1. Elément donneur de colorant utilisé dans un procédé de transfert de colorant par la chaleur comprenant un support portant, sur l'une de ses faces, une couche de colorant comprenant un colorant capable d'être transféré par la chaleur et sur l'autre face, une couche favorisant le glissement comprenant un copolymère contenant des séquences polyvinylique et siloxane, le polysiloxane représentant de 2 à 30% en poids dudit copolymère et le polysiloxane ayant un poids moléculaire d'au moins 3900.

2. Elément selon la revendication 1, dans lequel ledit copolymère à séquences silicone et polyvinylique est dérivé d'un monomère vinylique et d'un initiateur polydiméthylsiloxane macroazo.

3. Elément selon la revendication 1, dans lequel lesdites séquences polyvinyliques ont une Tg supérieure à 100°C.

4. Elément selon la revendication 1, dans lequel ledit copolymère siloxane contenant une séquence polyvinylique contient des motifs récurrents représentés par la formule structurale : 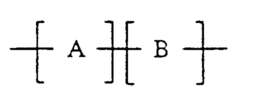 où :
A représente un polymère vinylique ; et
B représente un groupe ayant la formule structurale : 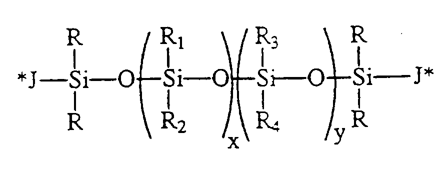 où :
chaque groupe J représente 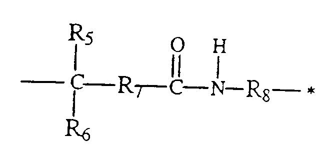
* représente le point de rattachement,
R, R₁, R₂, R₃ et R₄ représentent chacun indépendamment un groupe alkyle substitué ou non ou un groupe fluoroalkyle de 1 à 5 atomes de carbone ou un groupe aryle substitué ou non de 6 à 12 atomes de carbone.
R₅ et R₆ représentent chacun indépendamment un groupe alkyle substitué ou non de 1 à 5 atomes de carbone, un groupe aryle substitué ou non de 6 à 12 atomes de carbone, un halogène ou un radical cyano ;
R₇ et R₈ représentent chacun indépendamment un groupe alkyle substitué ou non de 1 à 5 atomes de carbone, un groupe aryle substitué ou non de 6 à 12 atomes de carbone ; et
les valeurs de x et de y sont comprises entre 0 et 400, à la condition que x + y soit compris entre 50 et 400.

5. Elément selon la revendication 4, dans lequel A représente un polymère d'acrylate, de méthacrylate, d'acrylamide, de styrène, d'hydroxystyrène, de pyrrollidinone vinylique, d'anhydride maléïque, de maléimide N-substitué ou d'éther vinylique.

6. Elément selon la revendication 4, dans lequel R, R₁, R₂, R₃, R₄ et R₅ sont chacun un groupe méthyle, R₆ est un radical cyano, R₇ est -CH₂CH₂- et R₈ est -CH₂CH₂CH₂-.

7. Procédé de formation d'une image par transfert de colorant, comprenant :
(a) le chauffage, en conformité avec l'image, d'un élément donneur de colorant selon la revendication 1, et
(b) le transfert par la chaleur d'une image de colorant sur un élément récepteur de colorant superposé à l'élément donneur de colorant, de manière que la couche de colorant de l'élément donneur soit en contact avec la couche réceptrice de colorant de l'élément récepteur de colorant, afin de former ladite image par transfert de colorant.

8. Procédé selon la revendication 7, dans lequel ledit élément donneur de colorant est tel que défini dans la revendication 4.

9. Assemblage pour le transfert de colorant par la chaleur, comprenant :
(a) un élément donneur de colorant tel que défini dans la revendication 1, et
(b) un élément récepteur de colorant comprenant un support revêtu d'une couche réceptrice d'image de colorant, ledit élément récepteur de colorant étant superposé audit élément donneur de colorant, de manière que ladite couche de colorant soit en contact avec ladite couche réceptrice d'image de colorant.

10. Assemblage selon la revendication 9, dans lequel ledit élément donneur de colorant est tel que défini dans la revendication 4.
